# EUROPEAN PATENT SPECIFICATION

(11) **EP 2 728 164 B1**
(45) Date of publication and mention of the grant of the patent: **17.08.2016**
(21) Application number: 12190640.8
(22) Date of filing: 30.10.2012
(51) Int. Cl.: F02M 63/00, F16K 15/04, F16K 17/04

(54) **Valve arrangement**
Ventilanordnung
Agencement de soupape

(43) Date of publication of application: 07.05.2014
(73) Proprietor: Delphi International Operations Luxembourg S.à r.l., 4940 Bascharage (LU)
(72) Inventor: Pereira, Etienne, 41120 Cande-Sur-Beuvron (FR); Trenado, Guillaume, 41120 Les Montils (FR); Rouillon, Raphael, 41150 Onzain (FR); Rouet, Jean-Luc, 41120 Chitenay (FR)
(74) Representative: Delphi France SAS

(56) References cited:
- EP-A2- 2 055 929
- US-A- 3 055 388
- US-A1- 2005 205 065
- US-B1- 6 446 613

## Description

### Field of the Invention

The invention relates to a valve arrangement for use in a fuel system for an internal combustion engine. In particular, but not exclusively, the invention relates to a valve arrangement for use in limiting the pressure of fuel in an accumulator volume (common rail) of a common rail fuel system.

### Background to the Invention

In common rail fuel systems for diesel engines, a high pressure fuel pump receives fuel at relatively low pressure (e.g. transfer pressure) from a low pressure pump and pressurises fuel to a high level suitable for injection. The high pressure fuel pump supplies pressurised fuel to a fuel accumulator volume, referred to as the common rail, from where the pressurised fuel is delivered to the downstream fuel injectors of the system.

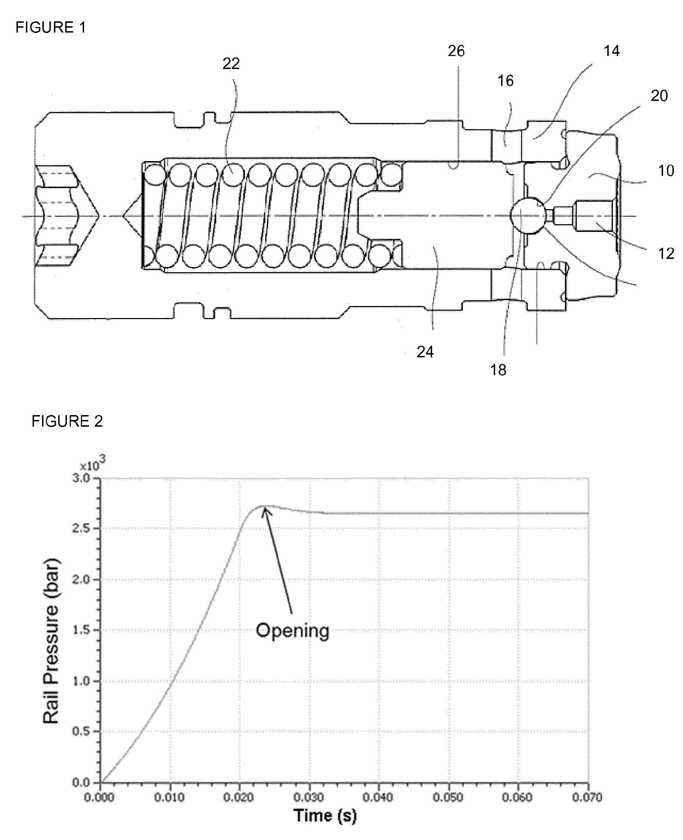

It is usual to provide the common rail with a pressure limiter valve, or safety valve, which is operable to open in the event that fuel pressure within the common rail exceeds a predetermined safe level (referred to as the threshold pressure level). The pressure limiter valve comes into effect should a failure occur in the common rail fuel system and provides a means by which over-pressurised fuel can escape to low pressure to avoid the risk of rupture and failure of pump parts, or any other component in the common rail fuel system, including, for example, the common rail, high pressure pipes, pressure sensors, or injectors. One known pressure limiter valve arrangement for performing the aforementioned function is shown in Figure 1. The valve arrangement includes a first valve housing 10 defining an inlet channel 12 and a second valve housing 14 defining an outlet channel 16. The inlet channel 12 communicates with fuel at high pressure within the common rail (not shown) and the outlet channel 16 communicates with a low pressure fuel drain (not shown). A valve member 18 in the form a ball valve is engageable with a valve seating 20 to control communication between the common rail and the low pressure drain. The valve seating 20 is spherical in form and defines a valve seating area which accommodates the seated ball 18. A spring 22 acts on the ball valve 18 through an abutment member 24 which is slidably received in a bore 26 defined by the second valve housing 14, and serves to urge the ball valve 18 against the valve seating 20. The spring 22 acts against fuel pressure within the inlet channel 12 and, hence, against fuel pressure within the common rail.

When in the seated position (i.e. ball valve closed), fuel within the common rail is unable to flow to the low pressure drain past the valve seating 20. For a correctly functioning pump, the ball valve 18 remains seated throughout pump life and the threshold pressure level is never exceeded in the rail. However, in the event of a failure in the common rail fuel system causing an increase in fuel pressure within the common rail above the threshold pressure level, the force acting on the ball valve 18 in an opening direction (i.e. against the spring force) is sufficient to lift the ball valve 18 from the valve seating 20. In such circumstances fuel within the common rail is able to flow to the low pressure drain through the outlet passage 16, thus relieving high fuel pressure within the rail. The threshold pressure level at which the valve opens is determined by the ratio of the spring force to the area of the seating 20. In EP 2055929 is disclosed a pressure limiter with two restricted flow means.

If the threshold pressure is exceeded, causing the ball valve 18 to lift, a restriction is created between the ball valve 18 and the valve seating 20. The pressure required to keep the ball valve open is equal to the spring force divided by the new surface area over which the pressure acts. This new surface area is a combination of the exposed surfaces of the ball valve 18, and the abutment member 24, which can be approximated as the cross sectional area of the bore 26. As this area is much larger than the valve seating area, the pressure required to keep the ball valve open, or the regulation pressure, is lower than the pressure required to open it initially. However, due to the restriction between the ball valve 18 and the valve seating 20, the pressure that is exerted over the surfaces of the ball valve 18 and abutment member 24 is considerably lower than the fuel pressure within the common rail. Therefore, the regulation pressure for the valve arrangement in Figure 1 is not much lower than the opening pressure. This effect is illustrated in Figure 2.

The effect of this is that the fuel flows through the valve arrangement at relatively high pressure, and therefore at a high flow rate. This means that if the ball valve is open for more than a few minutes, damage could occur to the common rail system or to the ball valve itself. Damage may be caused through one of a number of mechanisms: (1) the high pressure and flow rate lead to a very high temperature around the ball valve; (2) a combination of high pressure and high flow rate cause direct erosion of the ball valve and piston; and (3) the high pressure may cause damage by fatigue, creating cracks in the components.

It is desirable in modern diesel engines for common rail systems to offer a "limp home" mode, in which the system is able to comfortably operate for significant periods in the event of a pump failure causing high pressure in the system. Valve arrangements such as that shown in Figure 1 are not suitable for this requirement, as they can only operate effectively for short periods.

By way of background to the invention, US 5,295,469 to Nippondenso Co., Ltd. discloses a pressure limiter valve which offers a limp home mode. However, the arrangement described in this patent suffers from the drawback that a piston member must be formed with grooves in order to create the limp home effect. The grooves in the piston member also need to communicate with an annular groove in the valve housing and, therefore, the tolerances involved in manufacturing the components of the valve will be relatively tight. As a consequence, the valve arrangement is difficult, and expensive, to manufacture.

It is one object of the present invention to provide an improved valve arrangement, for use in a high pressure fuel system, which overcomes or alleviates the aforementioned disadvantages known in the prior art.

### Summary of the Invention

According to a first aspect of the invention, there is provided a valve arrangement for use in limiting the pressure of fuel within an accumulator volume of an accumulator fuel system to a predetermined threshold level, the valve arrangement comprising: a valve outlet passage for communication with a low pressure drain, wherein the valve outlet passage extends laterally from the valve housing bore; a valve housing provided with a valve housing bore for receiving fuel from the accumulator volume; and a valve member having a closed position in which it is engaged with a valve seating defined by the valve housing bore to prevent fuel flow from the accumulator volume to the valve outlet passage. The valve arrangement further includes a piston member; biasing means for urging the valve member towards the valve seating through the piston member, and a first restricted flow means for restricting the flow of fuel between the accumulator volume and the valve outlet passage during a first stage of valve opening movement as soon as the valve member is lifted from the valve seating. A second restricted flow means is effective during a second stage of valve opening movement which follows the first stage to provide a greater restriction than during the first stage. A third restricted flow means is effective during a third stage of valve opening movement, which follows the second stage, to provide a variable restriction to fuel flow dependent on the extent of opening of the valve outlet passage.

In one particular embodiment, the valve arrangement has application in a common rail fuel system for use in limiting the pressure of fuel within a common rail of the fuel system.

The invention provides the benefit that, by virtue of the variable restriction of the third restricted flow means, the pressure of fuel in the accumulator volume can be regulated at a pressure that is substantially lower than the opening pressure of the valve arrangement. This allows the fuel system to continue operating for extended periods in the event of a fault that leads to excessively high fuel pressure, without risk of damage to components of the fuel system.

The valve outlet passage may include a region of reduced diameter which communicates with the valve housing bore to restrict the flow of fuel to the low pressure drain. By including a region of reduced diameter, as opposed to reducing the diameter of the entire valve outlet passage, this feature can be manufactured to precise tolerances more easily, and therefore provide a more tightly-controlled restriction to fuel flow.

The piston member may cooperate with the region of the valve outlet passage of reduced diameter to define the extent of opening of the valve outlet passage. In this way, the level of restriction provided by the third restricted flow means may be varied.

The valve arrangement may be arranged such that the valve member and the piston member are formed together as an integrated component. This feature provides the benefit that fuel flow past the valve member is less likely to become unstable.

The valve arrangement may be arranged such that the third restricted flow means provides a lower level of restriction than either the first restricted flow means or the second restricted flow means. This means that once the third stage of valve opening movement has been reached, excess fuel can be drained at a relatively high flow rate, thereby quickly reducing pressure in the fuel system.

The valve arrangement may be arranged such that the first stage of valve opening is initiated when the pressure of the fuel within the accumulator volume reaches the pre-determined threshold level. This enables the use of the valve arrangement in a pressure relief application, in which the valve arrangement is used to prevent the pressure of the accumulator volume from going beyond the pre-determined threshold level.

The valve arrangement is arranged so that the variable restriction provided by the third restricted flow means is arranged to regulate the pressure of fuel in the accumulator volume at a level which is lower than the pre-determined threshold level. This provides the benefit that the common rail fuel system may continue operating for extended periods in the event of a fault that leads to excessively high fuel pressure, without risk of damage to components of the common rail fuel system.

The valve arrangement is arranged so that the first restricted flow means is defined between the valve member and the valve seating. The arrangement provides a simple system with fewer components required. Furthermore, this feature means that the first restriction is created immediately as the valve member opens.

The valve arrangement may be arranged so that the valve seating is frusto-conical to define a first conical section. A conical section is an effective way of ensuring that the valve member makes a good contact with the valve seating so as to seal effectively.

The valve arrangement may further comprise a second valve housing which defines a second valve housing bore, within which the biasing means is received, at least in part. This arrangement allows for ease of manufacture and assembly.

The valve arrangement may further comprise means to limit the range of movement of the piston member. This beneficially prevents the valve member from moving too far away from the valve seating, so that it cannot block the valve outlet passage. Furthermore, it prevents the piston member from overshooting following the second stage of valve opening movement, which could compromise performance of the valve arrangement.

The valve arrangement is arranged such that the second restricted flow means is defined by the piston member and a portion of the valve housing bore. This arrangement provides the benefit that a constant level of restriction can be created during the second stage of valve opening movement, such that the second restriction flow means acts as a transition between the first and third restricted flow means.

The valve arrangement is arranged such that the piston member is arranged to substantially occlude the valve outlet passage during the first and second stages of valve opening movement, and wherein the valve outlet passage is gradually uncovered during the third stage of valve opening movement, thereby defining the third restricted flow means. In this way, the valve arrangement can offer a variable restriction during the third stage of valve opening movement, and therefore regulate the pressure of the fuel in the accumulator volume at a substantially constant level.

The valve arrangement may be provided with means to prevent a build-up of pressure in a region which is beyond the outlet valve passage relative to the valve seating. This feature protects the internal components of the valve from becoming damaged as a result of excessive pressure.

The valve arrangement may be arranged such that the means to prevent a build-up of pressure comprises a backflow passage which is provided in the valve housing.

According to a second aspect of the invention, there is provided a high pressure common rail fuel system including a valve arrangement in accordance with the first aspect of the invention, for regulating the pressure of fuel in a common rail of the fuel system.

It will be appreciated that preferred and/or optional features of the first aspect of the invention may be incorporated alone or in appropriate combination in the second aspect of the invention also.

### Brief Description of the Drawings

In order that the invention may be more readily understood, preferred non-limiting embodiments thereof will now be described with reference to the accompanying drawings, in which:
Figure 1 shows a known pressure limiter valve arrangement;
Figure 2 is a graph showing the performance characteristics of the pressure limiter valve arrangement in Figure 1;
Figure 3 is a graph showing the performance characteristics of the valve arrangement of the invention;
Figure 4 is a cross-sectional view of a first embodiment of a valve arrangement of the invention;
Figure 5 is an enlarged view of a portion of the valve arrangement in Figure 4, showing a valve member creating a first flow restriction during a first stage of valve opening movement;
Figure 6 is an enlarged view of a portion of the valve arrangement in Figure 4, showing a second flow restriction during a second stage of valve opening movement;
Figure 7 is an enlarged view of a portion of the valve arrangement in Figure 4, showing a third flow restriction during a third stage of valve opening movement; and
Figure 8 is a cross-sectional view of a second embodiment of a valve arrangement of the invention.

### Detailed Description of Embodiments of the Invention

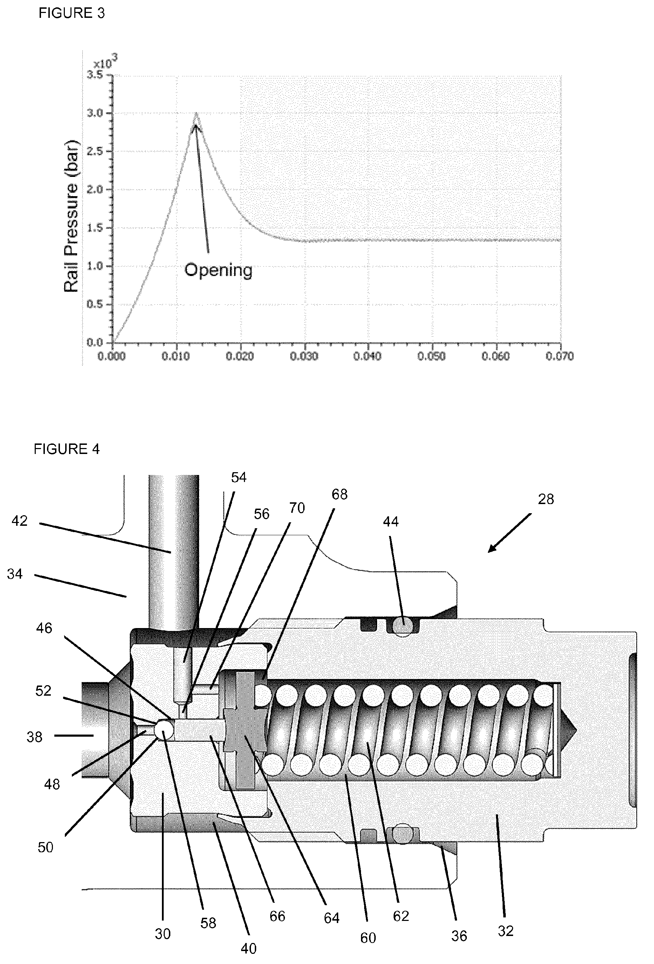

One object of the invention is to provide a valve arrangement in which a valve member is operable to regulate fuel pressure in an accumulator volume or common rail of a common rail fuel system of an internal combustion engine. The valve arrangement is configured so as to regulate fuel pressure within the common rail at a level which is substantially lower than a pre-determined threshold level at which the valve member opens. Figure 3 illustrates the performance characteristics of a valve arrangement of the invention, in which the fuel pressure in the common rail rises initially, until it reaches a level at which the valve member opens. Once the valve member opens, the pressure in the common rail is quickly reduced as excess fuel is drained past the valve member. The pressure then settles at a level which in this example is approximately half that at which the valve member initially opened, and the pressure is then regulated at this level. If the pressure in the common rail were to drop further (not shown), the valve member would close, and the process would start again.

This arrangement provides a clear benefit of the invention in that the regulating pressure is at a level which is considerably lower than the pre-determined threshold level at which the valve member opens, and is therefore at a level at which the valve arrangement and common rail can continue to operate without any danger of damage to any components.

Figure 4 shows a first embodiment of the valve arrangement 28 of the invention, in which the valve arrangement 28 has a first valve housing 30 and a second valve housing 32, both of which are received in a main valve housing 34. The main valve housing 34 is provided with a main valve housing bore 36 within which the first and second valve housings 30, 32 are received. An opening 38 is provided at one end of the main valve housing bore 36 to communicate with the common rail. The first valve housing 30 has a diameter which is smaller than the diameter of the main valve housing bore 36, and so there is a space between the first valve housing 30 and a surface of the main valve housing bore 36, which defines an annular chamber 40. The main valve housing 34 is further provided with a second bore which extends laterally from the main valve housing bore 36, and which defines a flow passage 42 to a low pressure drain (not shown). The second valve housing 32 is in screw threaded connection with the main valve housing 34, and is provided with an external groove 44 for receiving an O-ring which creates a seal to prevent leakage between the second valve housing 32 and the main valve housing 34.

The first valve housing 30 is provided with a first valve housing bore 46, an end of which is narrowed to define a valve inlet 48 for communication with the opening 38 in the main valve housing 34 which communicates with the common rail. The interface between the valve inlet 48 and the first valve housing bore 46 is chamfered so as to form a frusto-conical section 50 which defines a valve seating 52. An additional bore defining a valve outlet passage 54 extends laterally away from the first valve housing bore 46, for communication with the annular chamber 40, and therefore with the low pressure drain. The valve outlet passage 54 has an end section 56 of reduced diameter which determines the minimum level of restriction to flow to the annular chamber 40 once the piston has moved beyond a certain distance at which the end section 56 is fully uncovered. At this point, the cross-sectional flow area of the end section 56 is the governing restriction to flow to low pressure. The end section of the valve outlet passage 54 connects with the first valve housing bore 46 by means of a valve outlet opening which opens into the bore 46. A valve member in the form of a ball 58 is slidably received within the first valve housing bore 46 and has a closed position in which it is engaged with the valve seating 52 and, when the ball 58 is seated against the valve seating 52, fuel is prevented from flowing from the common rail to the low pressure drain.

The first valve housing 30 is further provided with a recess which opens into a bore in the second valve housing 32 to define a chamber 60 for receiving a spring 62, one end of the spring 62 being in abutment with a closed end of the chamber 60 in the second valve housing 32 and the other end of the spring 62 being in abutment with a disc 64 located in the recess of the first valve housing 30. The chamber 60 includes a narrowed portion near the closed end, which guides the spring 62 into the correct position. The narrowed portion is relatively short so that only a first, end coil of the spring 62, which is inactive, is guided. This avoids a situation in which the spring 62 rubs against the inside of the chamber 60 during operation, which would cause a parasite load as a result of friction. The spring 62 provides a biasing force for urging the ball 58 towards the valve seating 52. A piston 66 is provided between the ball 58 and the disc 64, the piston 66 having a contact surface at each end; one contact surface being in abutment with the ball 58, and one contact surface being in abutment with the disc 64. The contact surfaces of the piston 66 are convex, and the disc 64 has a corresponding contact surface that is concave. This creates a spherical interface between the piston 66 and the disc 64, which is arranged to compensate for any geometrical defects within the assembly, such as misalignment, a spring side load, or a perpendicularity defect. Both ends of the piston 66 are convex, so that during assembly the piston 66 may be inserted in any orientation. The biasing force is transmitted from the spring 62, through the disc 64 and piston 66, to the ball 58. The end of the piston 66 that abuts the ball 58 may be convex. The piston 66 is arranged to have a diameter which is less than the diameter of the first valve housing bore 46, to define a clearance therebetween. However, the clearance is small, and therefore movement of the piston 66 is substantially guided within the first valve housing bore 46.

The bore of the second valve housing 32 has a smaller diameter than the recess in the first valve housing 30, creating an overlap at the point where the first and second housings meet. The disc 64 has a larger diameter than the bore in the second valve housing 32, therefore the overlap acts as a mechanical stop 68 which limits the range of movement of the disc 64; this defines a maximum stroke of the piston 66.

The first valve housing 30 is provided with a bore which extends between the recess of the first valve housing 30 and the valve outlet passage 54. This bore defines a backflow passage 70, which prevents a build-up of pressure in the chamber 60.

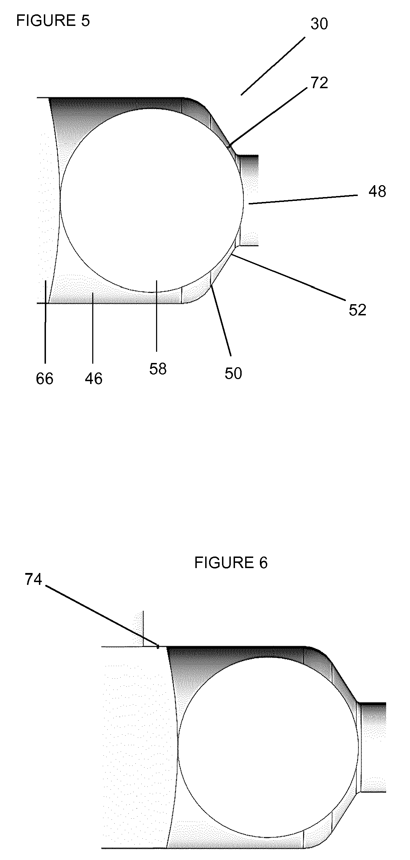

In use, when the ball 58 is seated against the valve seating 52, fuel within the common rail is unable to flow through the valve inlet 48, past the ball 58, to the low pressure drain. The valve seating 52 defines a seating area, which may be slightly larger than the cross-sectional area of the valve inlet 48. If the pressure of the fuel within the common rail exceeds the pre-determined threshold level, the force exerted on the ball 58 by the fuel is sufficient to overcome the biasing force from the spring 62. Therefore, the ball 58 lifts from the valve seating 52, which defines a gap therebetween, and initiates a first stage of valve opening movement, as shown in Figure 5. The pre-determined threshold level at which the ball 58 lifts from the valve seating 52 is determined by the ratio of the biasing force to the seating area.

It is noted that the clearance between the piston 66 and the first valve housing bore 46 allows for a flow path for fuel from the common rail to the low pressure drain as soon as the ball 58 lifts from the valve seating 52.

The previously described effect of ensuring a regulating pressure which is lower than the pre-determined threshold level at which the ball 58 lifts from the valve seating 52 is achieved through the implementation of a three-stage opening process including first, second and third stages of valve opening movement. Each stage of valve opening movement has a respective restricted flow means which may be referred to as the first, second and third flow restrictions, as illustrated in Figures 5 to 7.

The first flow restriction 72 is created when the ball 58 initially opens in the first stage of valve opening movement, i.e. immediately as the ball 58 moves off its seating. During the first stage of valve opening movement, the first flow restriction 72 becomes gradually less restrictive as the valve opens further, until a point is reached when the second flow restriction 74 is more restrictive than the first flow restriction 72; this is the point at which the second stage of valve opening movement commences. The second flow restriction 74 is fixed, in that it does not alter substantially as the valve opens further, and therefore the second flow restriction 74 acts as a transition stage to move the valve quickly from the first stage of valve opening movement to the third stage of valve opening movement. Once the valve reaches the third stage of valve opening movement, the third flow restriction 76 is created. The third flow restriction 76 provides a variable level of restriction, which may be substantially less restrictive than either the first or second flow restrictions 72, 74. This allows for a relatively high fuel flow rate through the third flow restriction 76, which means that excess fuel is drained quickly, thus reducing the fuel pressure more effectively. The third flow restriction 76 is arranged to be in a position which allows for the high pressure fuel to come into contact with a much larger surface area of the ball 58 and piston 66 than when the ball 58 is seated, therefore the ball 58 remains open at a pressure which is substantially lower than the pre-determined threshold level at which the ball 58 opens initially.

As shown in Figure 5, during the first stage of valve opening movement the first flow restriction 72 is defined between the ball 58 and the frusto-conical section 50 of the first valve housing bore 46. Due to the shape of the frusto-conical section 50, the position of the first flow restriction 72 is away from the valve inlet 48, substantially coinciding with the position at which the ball 58 makes contact with the frusto-conical section 50 when seated. Therefore, during the first stage of valve opening movement, the fuel pressure acts over a surface area of the ball 58 which is approximately the same as the seating area. Therefore, while the first restriction is governing the fuel flow, the pressure at which the ball 58 closes is very similar to the pre-determined threshold level at which the ball 58 originally lifts.

If the ball 58 remains in the first stage of valve opening movement, as a result of a low fuel flow rate, the ball 58 acts in a similar way to a normal pressure limiting valve; the valve arrangement 28 regulates the pressure at a level which is similar to the pre-determined threshold level, in the manner described earlier.

If the flow rate past the ball 58 rises, the ball 58 continues to lift away from the valve seating 56, so that it will soon reach a position where the gap between the ball 58 and the valve seating 56 is larger than the gap between the ball 58 and the intermediate section 60 of the valve inlet 48. This commences the second stage of valve opening movement, as illustrated in Figure 6.

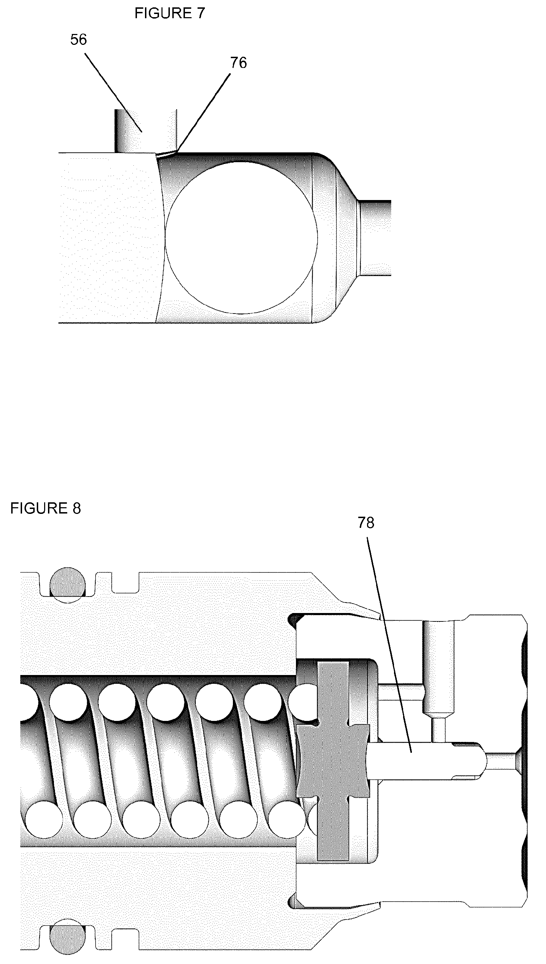

At this point, the second flow restriction 74, defined by the clearance between the piston 66 and the first valve housing bore 46, dominates over the first flow restriction 72. Therefore the pressure of the fuel which has entered the first valve housing bore 46 does not drop significantly before reaching the second flow restriction 74. This means that almost the entire area of a contact surface of the piston 66, as well as much of the surface of the ball 58, is exposed to high pressure fuel. As this is a much larger area than the seating area, the force exerted on the ball 58 and the piston 66 by the pressure of the fuel is much larger than the biasing force from the spring 62. Therefore, as soon as the second flow restriction 74 is activated, the piston 66 moves quickly away from the valve seating 52, until it reaches the point where it no longer completely occludes the valve outlet opening 56, commencing the third stage of valve opening movement as shown in Figure 7.

Once the ball 58 has reached the second stage of valve opening movement, a closing pressure is defined by the ratio of the biasing force to the exposed surface area of the second stage of valve movement, which can be approximated as the area of the first contact surface of the piston 66. The spring 62 will not be able to push the ball 58 back past the second flow restriction 74 until the fuel pressure drops to the closing pressure.

The valve arrangement 28 is not overly sensitive to the position of the valve outlet passage 54, as the piston 66 will simply continue to be pushed away from the valve seating 52 until the valve outlet opening 56 is uncovered. While the reaction force exerted by the spring 62 increases as the piston 66 compresses it further, during the second stage of valve opening movement the force exerted on the piston 66 by the pressure of the fuel in the common rail is considerably larger, and so the increase in reaction force from the spring 62 makes little difference. This feature of the invention allows for the valve outlet opening 56 to be positioned anywhere along the first valve housing bore 46, such that the position is optimised for the intended application of the valve arrangement 28. Furthermore, the flexibility of the position of the valve outlet opening 56 reduces the dependence on manufacturing tolerances, which means that the valve arrangement 28 is relatively simple and inexpensive to manufacture.

As the valve outlet opening 56 is uncovered, the third flow restriction 76 is defined by the portion of the valve outlet opening 56 which is exposed. As the piston 66 moves further away from the valve seating 52, more of the valve outlet opening 56 is uncovered, and hence the third flow restriction 76 becomes less restrictive. Therefore the third flow restriction 76 provides a variable level of restriction. In this way the fuel pressure during the third stage of valve opening movement is regulated; if the pressure increases, the piston 66 will be pushed further away from the valve seating 52 which increases the size of the exposed portion of the valve outlet opening 56, and therefore allows fuel to be drained at a higher flow rate which reduces the fuel pressure. If the fuel pressure decreases, the size of the exposed portion of the valve outlet opening 56 also decreases thereby lowering the flow rate giving rise to an increase in pressure.

The process of regulation continues in this fashion until the fuel pressure drops to the closing pressure at which the biasing force from the spring 62 is able to push the disc 64, piston 66 and ball 58 back to the closed position in which the ball 58 is seated on the valve seating 52.

The mechanical stop 68 is positioned to ensure that the maximum stroke of the piston 66 does not allow the ball 58 to reach the valve outlet opening 56. If this was not the case, the piston 66 may continue to move away from the valve seating 52 until the ball 58 reached the valve outlet opening 56, and at that point the ball 58 may block the valve outlet opening 56, preventing fuel being drained through it.

The backflow passage 70 is a preferred feature, as it prevents any build-up of pressure in the chamber 60 which houses the disc 64 and spring 62. There is a clearance between the disc 64 and an inner surface of the chamber 60, such that fuel can flow past the disc 64. The disc 64 may optionally be provided with holes and/or at least one flat surface in order to improve fuel circulation.

In the first embodiment of the invention, the ball 58 and piston 66 are arranged as separate components. A ball has a manufacturing process which allows for precise tolerances at low cost. However, in other embodiments, a combination involving at least two of the ball 58, piston 66 and disc 64, are formed together as a single integrated component. In particular, in an embodiment where the ball 58 and piston 66 are formed together as an integrated valve member 78 as shown in Figure 8, a more stable fuel flow past the integrated valve member 78 is created.

It will be appreciated by a person skilled in the art that the invention could be modified to take many alternative forms to that described herein, without departing from the scope of the appended claims.

## Claims

1. A valve arrangement (28) for use in limiting the pressure of fuel within an accumulator volume of an accumulator fuel system to a predetermined threshold level, the valve arrangement (28) comprising:
a valve outlet passage (54, 56) for communication with a low pressure drain, wherein the valve outlet passage (54, 56) extends laterally from the valve housing bore (46);
a valve housing (30) provided with a valve housing bore (46) for receiving fuel from the accumulator volume;
a valve member (58) having a closed position in which it is engaged with a valve seating (52) defined by the valve housing bore to prevent fuel flow from the accumulator volume to the valve outlet passage (54, 56);
a piston member (66);
biasing means (62) for urging the valve member (58) towards the valve seating (52) through the piston member (66);
a first restricted flow means (72) for restricting the flow of fuel between the accumulator volume and the valve outlet passage (54, 56) during a first stage of valve opening movement as soon as the valve member (58) is lifted from the valve seating (52);
the valve arrangement being **characterised in that**, it further comprises a second restricted flow means (74) effective during a second stage of valve opening movement which follows the first stage to provide a greater restriction than during the first stage; and
a third restricted flow means (76) effective during a third stage of valve opening movement which follows the second stage to provide a variable restriction to fuel flow dependent on the extent of opening of the valve outlet passage (54, 56)
and wherein the piston member (66) is arranged to substantially occlude the valve outlet passage (54, 56) during the first and second stages of valve opening movement, and wherein the valve outlet passage (54, 56) is gradually uncovered during the third stage of valve opening movement,
and wherein the first restricted flow means (72) is defined between the valve member (58) and the valve seating (52),
and wherein the second restricted flow means (74) is defined by the piston member (66) and a portion of the valve housing bore (46).

2. A valve arrangement (28) according to claim 1, wherein the valve outlet passage (54, 56) includes a region (56) of reduced diameter which communicates with the valve housing bore (46).

3. A valve arrangement (28) according to claim 2, wherein the piston member (66) cooperates with the region (56) of reduced diameter to define the extent of opening of the valve outlet passage (54, 56).

4. A valve arrangement (28) according to any one of claims 1 to 3, wherein the third restricted flow means (76) provides a lower level of restriction than either the first restricted flow means (72) or the second restricted flow means (74).

5. A valve arrangement (28) according to any one of claims 1 to 4, wherein the first stage of valve opening is initiated when the pressure of the fuel within the accumulator volume reaches the pre-determined threshold level.

6. A valve arrangement (28) according to any one of claims 1 to 5, wherein the valve seating (52) is frusto-conical to define a first conical section (50).

7. A valve arrangement (28) according to any one of claims 1 to 6, further comprising a second valve housing (32) which defines a second valve housing bore, within which the biasing means (62) is received, at least in part.

8. A valve arrangement (28) according to any one of claims 1 to 7, further comprising means to limit the range of movement of the piston member (66).

9. A valve arrangement (28) according to any one of claims 1 to 8, wherein the valve arrangement (28) is provided with means to prevent a build-up of pressure in a region which is beyond the outlet valve passage relative to the valve seating.

10. A valve arrangement (28) according to claim 9, wherein the means to prevent a build-up of pressure comprises a backflow passage (70) which is provided in the valve housing (30).

11. A high pressure common rail fuel system including a valve arrangement (28) according to any one of claims 1 to 10 for limiting the pressure of fuel within an accumulator volume to a predetermined threshold level.

## Patentansprüche

1. Eine Ventilanordnung (28) zur Verwendung bei einem Begrenzen des Drucks von Kraftstoff in einem Akkumulatorvolumen eines Akkumulatorkraftstoffsystems auf einen vorgegebenen Schwellenpegel, wobei die Ventilanordnung (28) aufweist:
einen Ventilauslassdurchlass (54, 56) zur Verbindung mit einem Niederdruckauslass, wobei sich der Ventilauslassdurchlass (54, 56) lateral von der Ventilgehäusebohrung (46) erstreckt;
ein Ventilgehäuse (30), das mit einer Ventilgehäusebohrung (46) versehen ist zur Aufnahme von Kraftstoff von dem Akkumulatorvolumen;
ein Ventilelement (58), das eine geschlossene Position hat, in der es mit einem Ventilsitz (52) in Kontakt ist, der durch die Ventilgehäusebohrung definiert ist, um einen Kraftstofffluss von dem Akkumulatorvolumen zu dem Ventilauslassdurchlass (54, 56) zu verhindern;
ein Kolbenelement (66);
Beeinflussungsmittel (62) zum Beeinflussen des Ventilelements (58) hin zu dem Ventilsitz (52) durch das Kolbenelement (66);
ein erstes Fluss-Drossel-Mittel (72) zum Drosseln des Flusses von Kraftstoff zwischen dem Akkumulatorvolumen und dem Ventilauslassdurchlass (54, 56) während einer ersten Stufe einer Ventilöffnungsbewegung, sobald das Ventilelement (58) von dem Ventilsitz (52) angehoben wird;
wobei die Ventilanordnung **dadurch gekennzeichnet ist, dass** sie weiter aufweist:
ein zweites Fluss-Drossel-Mittel (74), das während einer zweiten Stufe einer Ventilöffnungsbewegung wirksam ist, die auf die erste Stufe folgt, um eine größere Drosselung als während der ersten Stufe vorzusehen; und
ein drittes Fluss-Drossel-Mittel (76), das während einer dritten Stufe einer Ventilöffnungsbewegung wirksam ist, die auf die zweite Stufe folgt, um eine variable Drosselung für den Kraftstofffluss abhängig von dem Ausmaß der Öffnung des Ventilauslassdurchlasses (54, 56) vorzusehen,
und wobei das das Kolbenelement (66) angeordnet ist, um im Wesentlichen den Ventilauslassdurchlass (54, 56) während der ersten und zweiten Stufen einer Ventilöffnungsbewegung zu verschließen, und wobei der Ventilauslassdurchlass (54, 56) während der dritten Stufe einer Ventilöffnungsbewegung allmählich geöffnet wird,
und wobei das erste Fluss-Drossel-Mittel (72) zwischen dem Ventilelement (58) und dem Ventilsitz (52) definiert ist,
und wobei das zweite Fluss-Drossel-Mittel (74) durch das Kolbenelement (66) und einen Teil der Ventilgehäusebohrung (46) definiert ist.

2. Eine Ventilanordnung (28) gemäß Anspruch 1, wobei der Ventilauslassdurchlass (54, 56) einen Bereich (56) mit reduziertem Durchmesser umfasst, der mit der Ventilgehäusebohrung (46) verbunden ist.

3. Eine Ventilanordnung (28) gemäß Anspruch 2, wobei das Kolbenelement (66) mit dem Bereich (56) mit reduziertem Durchmesser zusammenwirkt, um den Umfang eines Öffnens des Ventilauslassdurchlasses (54, 56) zu definieren.

4. Eine Ventilanordnung (28) gemäß einem der Ansprüche 1 bis 3, wobei das dritte Fluss-Drossel-Mittel (76) einen geringeren Grad an Drosselung als entweder das erste Fluss-Drossel-Mittel (72) oder das zweite Fluss-Drossel-Mittel (74).

5. Eine Ventilanordnung (28) gemäß einem der Ansprüche 1 bis 4, wobei die erste Stufe der Ventilöffnung initiiert wird, wenn der Druck des Kraftstoffs in dem Akkumulatorvolumen den vorgegebenen Schwellenpegel erreicht.

6. Eine Ventilanordnung (28) gemäß einem der Ansprüche 1 bis 5, wobei der Ventilsitz (52) kegelstumpfförmig ist, um einen ersten kegelförmigen Abschnitt (50) zu definieren.

7. Eine Ventilanordnung (28) gemäß einem der Ansprüche 1 bis 6, die weiter ein zweites Ventilgehäuse (32) aufweist, das eine zweite Ventilgehäusebohrung definiert, in der das Beeinflussungsmittel (62) zumindest zum Teil aufgenommen ist.

8. Eine Ventilanordnung (28) gemäß einem der Ansprüche 1 bis 7, die weiter Mittel zum Begrenzen des Bereichs von Bewegung des Kolbenelements (66) aufweist.

9. Eine Ventilanordnung (28) gemäß einem der Ansprüche 1 bis 8, wobei die Ventilanordnung (28) mit Mittel vorgesehen ist, um einen Aufbau von Druck in einem Bereich zu verhindern, der hinter dem Ventilauslassdurchlass relativ zu dem Ventilsitz ist.

10. Eine Ventilanordnung (28) gemäß Anspruch 9, wobei das Mittel zum Verhindern eines Aufbaus von Druck einen Rückflussdurchlass (70) aufweist, der in dem Ventilgehäuse (30) vorgesehen ist.

11. Ein Hochdruck-Common-Rail-Kraftstoffsystem mit einer Ventilanordnung (28) gemäß einem der Ansprüche 1 bis 10 zum Begrenzen des Drucks von Kraftstoff in einem Akkumulatorvolumen auf einen vorgegebenen Schwellenpegel.

## Revendications

1. Agencement de valve (28) à utiliser pour limiter la pression du carburant dans un volume accumulateur d'un système de carburant à accumulateur, à un niveau seuil prédéterminé, l'agencement de valve (28) comprenant :
un passage de sortie de valve (54, 56) pour communiquer avec un drain à basse pression, de sorte que le passage de sortie de valve (54, 56) s'étend latéralement depuis le perçage (46) du boîtier de valve ;
un boîtier de valve (30) doté d'un perçage de boîtier de valve (46) pour recevoir du carburant depuis le volume accumulateur ;
un élément de valve (58) ayant une position fermée dans laquelle il est engagé avec un siège de valve (52) défini par le perçage de boîtier de valve pour empêcher un écoulement de carburant depuis le volume accumulateur vers le passage de sortie de valve (54, 56) ;
un élément formant piston (66) ;
un moyen de sollicitation (62) pour forcer l'élément de valve (58) vers le siège de valve (52) via l'élément formant piston (66) ;
un premier moyen de restriction d'écoulement (72) pour restreindre l'écoulement de carburant entre le volume accumulateur et le passage de sortie de valve (54, 56) pendant un premier stade du mouvement d'ouverture de la valve dès que l'élément de valve (58) est soulevé du siège de valve (52) ;
l'agencement de valve étant **caractérisé en ce qu'**il comprend en outre
un second moyen de restriction d'écoulement (74) efficace pendant un second stade du mouvement d'ouverture de la valve, qui fait suite au premier stade, pour assurer une restriction plus forte que pendant le premier stade ; et
un troisième moyen de restriction d'écoulement (76) efficace pendant un troisième stade du mouvement d'ouverture de la valve qui fait suite au second stade pour présenter une restriction variable à l'écoulement du carburant, en dépendance de l'étendue d'ouverture du passage de sortie de valve (54, 56),
et dans lequel l'élément formant piston (66) est agencé pour sensiblement effectuer une occlusion du passage de sortie de valve (54, 56) pendant le premier et le second stade du mouvement d'ouverture de la valve, et dans lequel le passage de sortie de valve (54, 56) est progressivement découvert pendant le troisième stade du mouvement d'ouverture de la valve,
et dans lequel le premier moyen de restriction d'écoulement (72) est défini entre l'élément de valve (58) et le siège de valve (52),
et dans lequel le second moyen de restriction d'écoulement (74) est défini par l'élément formant piston (66) et une portion du perçage de boîtier de valve (46).

2. Agencement de valve (28) selon la revendication 1, dans lequel le passage de sortie de valve (54, 56) inclut une région (56) de diamètre réduit qui communique avec le perçage du boîtier de valve (46).

3. Agencement de valve (28) selon la revendication 2, dans lequel l'élément formant piston (66) coopère avec la région (56) de diamètre réduit pour définir l'extension de l'ouverture du passage de sortie de valve (54, 56).

4. Agencement de valve (28) selon l'une quelconque des revendications 1 à 3, dans lequel le troisième moyen de restriction d'écoulement (76) assure un niveau de restriction plus faible que le premier moyen de restriction d'écoulement et/ou que le second moyen de restriction d'écoulement (74).

5. Agencement de valve (28) selon l'une quelconque des revendications 1 à 4, dans lequel le premier stade de l'ouverture de la valve est commencé quand la pression du carburant dans le volume accumulateur atteint le niveau seuil prédéterminé.

6. Agencement de valve (28) selon l'une quelconque des revendications 1 à 5, dans lequel le siège de valve (52) est tronconique pour définir une première section conique (50).

7. Agencement de valve (28) selon l'une quelconque des revendications à 6, comprenant en outre un second boîtier de valve (32) qui définit un second perçage de boîtier de valve dans lequel le moyen de sollicitation (62) est reçu au moins en partie

8. Agencement de valve (28) selon l'une quelconque des revendications 1 à 7, comprenant en outre un moyen pour limiter la plage de mouvement de l'élément formant piston (66).

9. Agencement de valve (28) selon l'une quelconque des revendications 1 à 8, dans lequel l'agencement de valve (28) est doté de moyens pour empêcher une accumulation de pression dans une région qui est au-delà du passage de sortie de valve par rapport au siège de valve.

10. Agencement de valve (28) selon la revendication 9, dans lequel le moyen pour empêcher une accumulation de pression comprend un passage de reflux (70) qui est prévu dans le boîtier de valve (30).

11. Système de carburant à rampe commune à haute pression incluant un agencement de valve (28) selon l'une quelconque des revendications 1 à 10 pour limiter la pression du carburant dans un volume accumulateur à un niveau seuil prédéterminé.
